# EUROPEAN PATENT APPLICATION

(11) **EP 4 775 417 A1**
(43) Date of publication of application: **15.07.2026**
(21) Application number: 26151244.6
(22) Date of filing: 12.01.2026
(51) Int. Cl.: B60G 11/50, B60G 3/20, B60G 17/015, B60G 21/055, B60G 13/00

(54) **ROAD VEHICLE WITH AN ACTIVE SUSPENSION UNIT**

(30) Priority: 14.01.2025 IT 202500000474
(71) Applicant: FERRARI S.p.A., 41100 Modena (IT)
(72) Inventor: FERRIGNO, Rocco, 41100 MODENA (IT); ANNEQUIN-DIGOND, Thierry, 41100 MODENA (IT); MALAGO', Marco, 41100 MODENA (IT); ZAMPIERI, Alberto, 41100 MODENA (IT)
(74) Representative: Studio Torta S.p.A.

(57) **Abstract**

A road vehicle with a roll axis X, a pitch axis Y and a yaw axis Z; wherein the vehicle comprises a frame, two front wheels, two rear wheels, an active front suspension unit acting on the front wheels and/or an active rear suspension unit acting on the rear wheels; wherein the active front and/or rear suspension unit comprises: a first and a second rocker arm coupled to the frame from opposite sides along the pitch axis and rotatable around the corresponding pins with axes which are parallel to each other, included in a plane orthogonal to the yaw axis Z and at the same elevation along the yaw axis Z; a first and a second suspension arm each having a first end coupled to the corresponding rocker arm on the wheel side and a second end coupled to the corresponding wheel; a preferably active rod damper of variable length along an axis A" parallel to the pitch axis Y having a first end coupled to one of the two rocker arms and a second end coupled to the other rocker arm; a crossbar bridging the two rocker arms; an electric motor acting directly on the bar to control the rotation of the bar along an axis M parallel to the axes of the pins and thus generate the coordinated rotation of the two rocker arms.

## Description

### Cross-Reference to Related Applications

This patent application claims priority from Italian Patent Application no. 102025000000474 filed on January 14, 2025, the entire disclosure of which is incorporated herein by reference.

### Technical Field of the Invention

The technical field of reference for the present invention is the one related to road vehicles, in particular sports road vehicles. For the purposes of the present invention, the road vehicle comprises for each wheel a rocker arm mounted in a rotatable manner on the frame around a pivot and connected from opposite sides to a suspension arm of the wheel and to a rod damper. The present invention, in detail, relates to an active suspension unit configured to generate a rotational torque on both rocker arms of the corresponding front or rear axle.

### State of the Art

The present invention relates to a road vehicle, in particular a sports road vehicle, with a roll axis, a pitch axis and a yaw axis. As known, the vehicle comprises a frame and four wheels. The wheels are in contact with the ground while the frame represents the suspended portion of the vehicle. According to the prior art, each wheel is provided with an independent suspension unit connecting the corresponding wheel to the frame. Currently, they are known so called active suspension units wherein each wheel has a rotary electric motor on the frame side controlled to rotate a rocker arm coupled on the opposite side to the corresponding wheel. In detail, the art currently in use provides a suspension unit independently associated with the corresponding wheel comprising:
- a rocker arm coupled to the frame in a rotatable manner around a pivot with an axis preferably substantially parallel to the vehicle longitudinal extension direction;
- a suspension arm having a first end coupled to the rocker arm on the wheel side and a second end coupled to the wheel;
- a rod damper substantially arranged in a plane orthogonal to the roll axis and having a first end coupled to the rocker arm on the frame side and a second end coupled to the rocker arm;
- an electric motor configured to generate a torque to rotate the rocker arm around the pivot;
- a spring device configured to generate a return torque on the rocker arm.

According to this prior art, the motor is rotary and acts via a rotary/linear motion converter on the damper to control the motion of the rod along its axis on the side of the rocker arm so that by changing its length the rod damper controls the rotation of the rocker arm around the pivot. Thus, in this prior art, the electric motor is coupled to the frame end of the damper (towards the centre of the vehicle) and a gearbox configured to convert the rotary motion of the motor into axial motion of the damper rod is provided between the motor and damper. Furthermore, according to the prior art, the spring device is a coil spring coaxial to the rod damper. The active damper is therefore stressed by the passive load of the spring, the passive load of the damper and the active force of the damper: this combination causes a significant overall operating load, hence significant unit dimensions. The prior art just described therefore provides an active suspension unit for each wheel, resulting in a large number of components to be installed on the vehicle.

### Object and Summary of the Invention

On the basis of the prior art, the present invention proposes a vehicle as claimed in the appended claims, wherein an active suspension unit is provided which acts simultaneously on both front and/or rear wheels and thus requires fewer components to be installed on the vehicle.

According to the broadest definition of the present invention, a road vehicle with a roll axis X, a pitch axis Y and a yaw axis Z is provided; wherein the vehicle comprises a frame, two front wheels and two rear wheels. According to the present invention, a front active suspension unit is provided for the pair of front wheels and/or a rear active suspension unit is provided for the pair of rear wheels, i.e. a single active suspension unit acting in a coordinated manner on the corresponding pair of wheels. The front and/or rear active suspension unit is an active suspension unit comprising:
- a first and a second rocker arm coupled to the frame on opposite sides along the pitch axis Y and rotatable around corresponding pivots with axes parallel to each other A, A', included in a plane orthogonal to the yaw axis (Z) and at the same height along the vertical direction parallel to the yaw axis Z;
- a first and a second suspension arm each having a first end coupled to the corresponding rocker arm on the wheel side and a second end coupled to the corresponding wheel; when travelling in a straight line, the first ends are at the same elevation along the vertical direction parallel to the yaw axis Z and preferably the second ends are also at the same elevation along the vertical direction parallel to the yaw axis Z;
- a rod damper of variable length along an axis "A" having a first end coupled to one of the two rocker arms and a second end coupled to the other rocker arm; when travelling in a straight line, the ends are at the same elevation along the vertical direction parallel to the yaw axis Z so that the damper is arranged along an axis "A" parallel to the pitch axis Y (at least when the vehicle is stationary);
- a crossbar between the two rocker arms supported by one end of an electric motor (of the rotary type) so that the motor acts directly in rotation on the bar (without converting the rotary motion of the motor into linear motion) to control the rotation of the bar around an axis M and thus generate (when required) the coordinated rotation of the two rocker arms around the pivots. In the absence of vertical shaking (sudden vertical uplift of the wheels of an axle), the axis M is parallel to the axes A and A' of the pivots (it is in this condition also in straight and curved driving) .

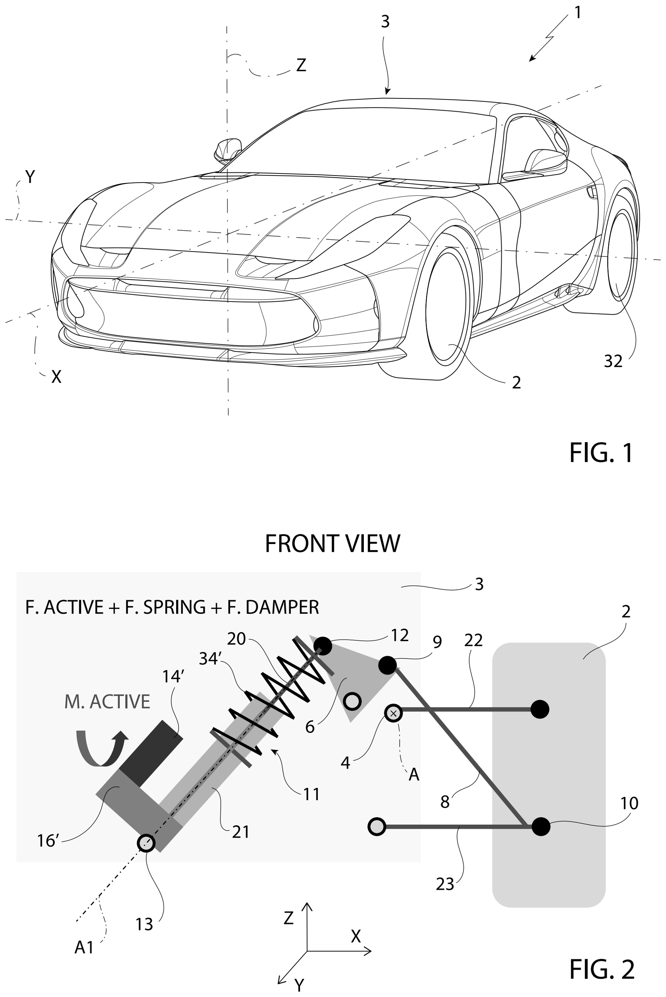

Preferably, the rod damper is not a passive device but an active component preferably driven by an electric motor (substantially as shown in Figure 2) which is controlled by a control unit (preferably the same one that controls the rotary electric motor) to generate a length variation along its axis "A" and consequently discordant controlled rotations of the two rocker arms. This peculiarity is particularly advantageous in the case of vertical shaking, as the following description will show.

Preferably, a coil spring is provided around the rod damper.

Preferably, a torsion bar with a corresponding axis parallel to the axes A and A' of the pivots and acting directly on the corresponding rocker arm at its pivot is provided for each rocker arm.

Two alternative embodiments are provided. In the first embodiment, the crossbar is coupled to the rocker arms at attachment points that are at the same elevation in a straight line along the vertical direction parallel to the yaw axis Z. Preferably, in this embodiment, the attachment points are located along the vertical direction parallel to the yaw axis Z at a higher elevation than the pins. Even more preferably, in this embodiment, the rotary electric motor comprises an opposite end to the bar constrained to the frame in a rotatable manner around an axis M' parallel to the pitch axis Y so that in the event of vertical shaking the bar is moved along the direction parallel to the yaw axis Z generating opposite rotations of the rocker arms and compression of the rod damper. Preferably the damper is an active device and the variation of its extension is controlled by a special control unit so that the stress transmitted to the rocker arms is controlled.

In the second embodiment, the crossbar is coupled to the rocker arms at different attachment points at different elevations along the vertical direction parallel to the yaw axis Z. Preferably, in this embodiment, the attachment points are located along the vertical direction parallel to the yaw axis Z on sides opposite to the pins. Even more preferably, in this embodiment, the rotary electric motor comprises an end opposite to the bar constrained to the frame in a rotatable manner around an axis "M" parallel to the yaw axis Z so that, in the event of vertical shaking, the bar is moved along the direction parallel to the pitch axis Y with concordant rotations of the rocker arms and there is activation of the rod damper. This activation can be controlled making the damper as an active device connected to a control unit.

### Brief Description of the Drawings

To better understand the present invention, a preferred embodiment thereof will be now described, for merely exemplary and non-limiting purposes, with reference to the appended drawings, wherein:
- Figure 1 is a schematic view of a road vehicle;
- Figure 2 is a schematic front view of an active suspension representing the prior art most similar to the present invention;
- Figures 3 and 4 are a front view and a side view of a first embodiment of an active suspension according to the present invention under neutral conditions (electric suspension motors inactive and with the vehicle not cornering and in the absence of vertical shaking);

- Figures 5 and 6 are a front view and a side view of the aforesaid first embodiment under cornering conditions (electric rotary suspension motor active and with the vehicle cornering in the absence of vertical shaking);
- Figures 7 and 8 are a front view and a side view of the aforesaid first embodiment under vertical shaking conditions (damper electric motor activated and with vehicle not cornering);
- Figures 9 and 10 are a front view and a side view of a second embodiment of an active suspension according to the present invention under neutral conditions (electric suspension motors not active and with the vehicle not cornering and in the absence of vertical shaking);
- Figures 11 and 12 are a front view and a side view of the aforesaid second embodiment under cornering conditions (electric rotary suspension motor active and with the vehicle cornering in the absence of vertical shaking);
- Figures 13 and 14 are a front view and a side view of the aforesaid second embodiment under vertical shaking conditions (electric motor of the damper activated and with vehicle not cornering).

### Preferred Embodiments Of The Invention

Figure 1 is a schematic view of a road vehicle. As visible, Figure 1 shows a road vehicle 1 with a roll axis X, a pitch axis Y and a yaw axis Z. The vehicle comprises a frame 3 and two front wheels 2 and two rear wheels 32. According to the present invention, there is provided an active front suspension unit for coordinated control of the front wheels and/or an active rear suspension unit for coordinated control of the rear wheels.

Figure 2 is a schematic view of an active suspension representing the prior art most similar to the present invention. This figure shows an active suspension unit comprising:
- a rocker arm 6 coupled to the frame 3 in a rotatable manner around a pivot 4 with an axis A substantially parallel to the vehicle longitudinal extension direction;
- a suspension arm 8 having a first end 9 coupled to the rocker arm 6 on the wheel side 2 and a second end 10 coupled to the wheel 2;
- a rod damper 11 of variable length along an axis A' having a first movable end 12 coupled to the rocker arm 6 on the frame side 3 and a second fixed end 13 coupled to the frame 3;
- an electric rotary motor 14' configured to generate a rotation torque on the rocker arm 6 to rotate it around the pivot 4.

As visible, according to the prior art of Figure 2, the rotary electric motor 14' is coupled to the fixed end 13 of the rod damper 11 and a gearbox/converter 16' is present configured to transform the rotational motion of the motor 14' into translational motion of the rod 20 along the axis A1 relative to the cylinder 21. In addition, a coil spring 34' coaxial to the rod damper 11 is present.

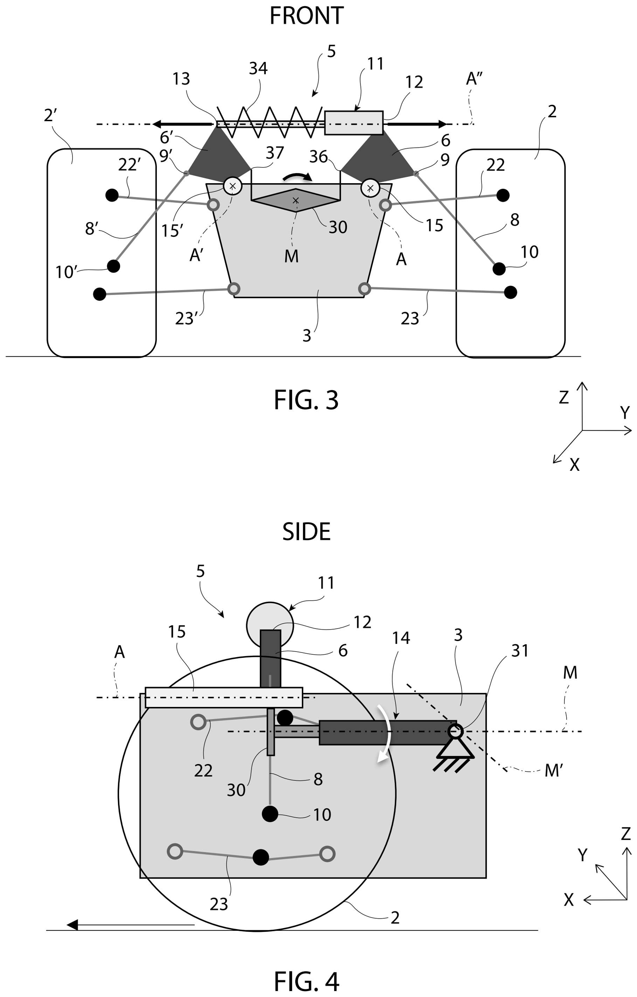

Figures 3 and 4 are a front view and a side view of a first embodiment of an active suspension according to the present invention under neutral conditions (electric suspension motors not active and with the vehicle not cornering and in the absence of vertical shaking). In these figures a first example of an active front suspension unit 5 is shown that is connected to the front wheels 2, 2' and that comprises a first and second rocker arm 6, 6' coupled to the frame 3 on opposite sides along the pitch axis Y in a mirror-like manner relative to the plane defined by the roll axis X and yaw axis Z. The rocker arms 6, 6' are mounted on the frame in a rotatable manner around corresponding pivots 4, 4' which in this figure have axes A, A' parallel to each other, are included in a plane orthogonal to the yaw axis (Z) and are at the same elevation along the yaw axis Z (substantially parallel to the vehicle longitudinal extension direction, when stationary, substantially coincides with the roll axis X). Figures 3 and 4 show for each wheel 2, 2' a suspension arm 8, 8'. Each suspension arm 8, 8' has a first end 9, 9' coupled to the corresponding rocker arm 6, 6' on the wheel side 2, 2' and a second end 10, 10' coupled (at a lower elevation) to the corresponding wheel 2, 2'. A rod damper 11 of variable length along an axis A" (in these figures parallel to the pitch axis Y) is present having a first end 12 coupled to one of the two rocker arms 6 and a second end 13 coupled to the other rocker arm 6'. In this example, the rod damper 11 is active, i.e. its length along the axis "A" can be controlled by a special control unit. The ends facing each other of the rocker arms are connected by a crossbar 30 (in these figures extending substantially parallel to the pitch direction Y) which acts as a bridge between the two rocker arms 6, 6'. Figure 4 allows to see a rotary electric motor 14 acting directly on the bar 30 to control the rotation of the bar 30 around an axis M (in these figures parallel to the roll axis X) and thus generate the coordinated and concordant rotation of the two rocker arms 6, 6'. A coil spring 34 is provided around the rod damper 11 and for each rocker arm 6, 6' there is a torsion bar 15, 15' coaxial with the corresponding pivot 4, 4' along the axis A, A' and acting directly on the corresponding rocker arm 6, 6' at its pivot 4, 4'. Although not shown, an electric motor coupled to the damper 11 is present making it as an active component that can be driven by a control unit when appropriate.

Aspects that are peculiar to this embodiment and that will not be similarly present in the second embodiment are the bar geometry with different attachment points to the rocker arms, the different geometry of the rocker arms and the different coupling of the motor to the frame. In the example of Figures 3 and 4 the crossbar 30 is (as already said) substantially horizontal and is coupled to the rocker arms 6, 6' at attachment points 36, 37 at the same elevation along the vertical direction parallel to the yaw axis Z. As visible, the attachment points 36, 37 are located along the vertical direction parallel to the yaw axis Z at a higher elevation than the pins 4, 4' (the bar 30 is between the ground and the pins). In Figure 4, it can be noted that the rotary motor 14 has a second end 31 opposite to the bar 30 which is constrained to the frame 3 in a rotatable manner around an axis M' parallel to the pitch axis Y.

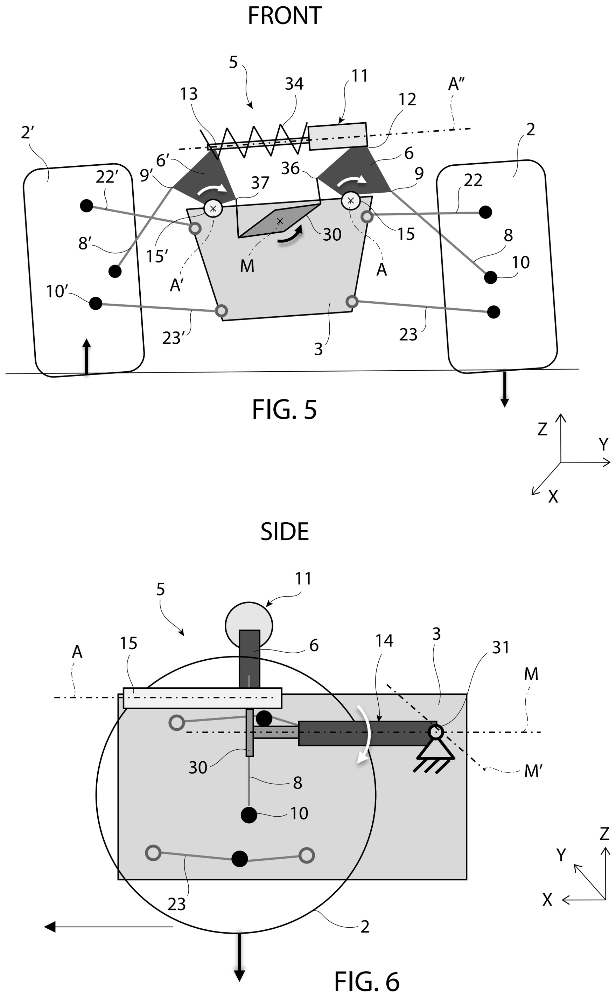

Figures 5 and 6 are a front view and a side view of the aforesaid first embodiment under cornering conditions (rotary electric motor 14 active with the vehicle cornering in the absence of vertical shaking). In these figures, it can be noted that the rotation of the bar 30 around the axis M (parallel to the axes A, A' of the pivots 4, 4') due to the activation of the motor 14 generates a concordant and coordinated rotation of the rocker arms 6, 6' which then, due to the effect of the arms 8, 8', act in an opposite manner on the two wheels 2 2' to properly run the curved trajectory. In this configuration, the damper 11 is not active (corresponding motor not activated).

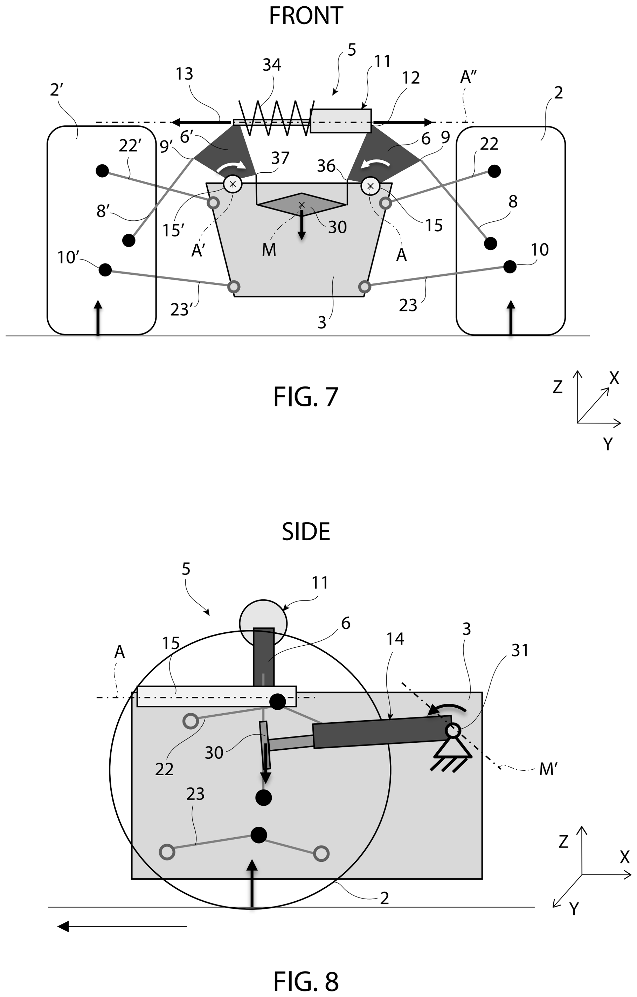

Figures 7 and 8 are a front view and a side view of the aforesaid first embodiment under vertical shaking conditions (rotary electric motor 14 not active, damper motor activated and with vehicle not cornering). It can be noted that the lifting of the wheels 2, 2' generates, thanks to the arms 8, 8', a discordant rotation of the rocker arms which actually push the bar 30 downwards. This movement is supported by the fact that the opposite end 31 of the motor is coupled to the frame in a rotatable manner around the axis M' parallel to the pitch axis Y. The shaking can then be managed by the active control on the damper 11 via its motor, which is activated in this situation.

It was then shown that the first embodiment, from the rest configuration shown in Figures 3 and 4, allows the curve to be performed and the vertical shake to be absorbed. As for the driving of the electric motors, they are generally controlled by a special control unit connected in turn to sensors integrated in the vehicle.

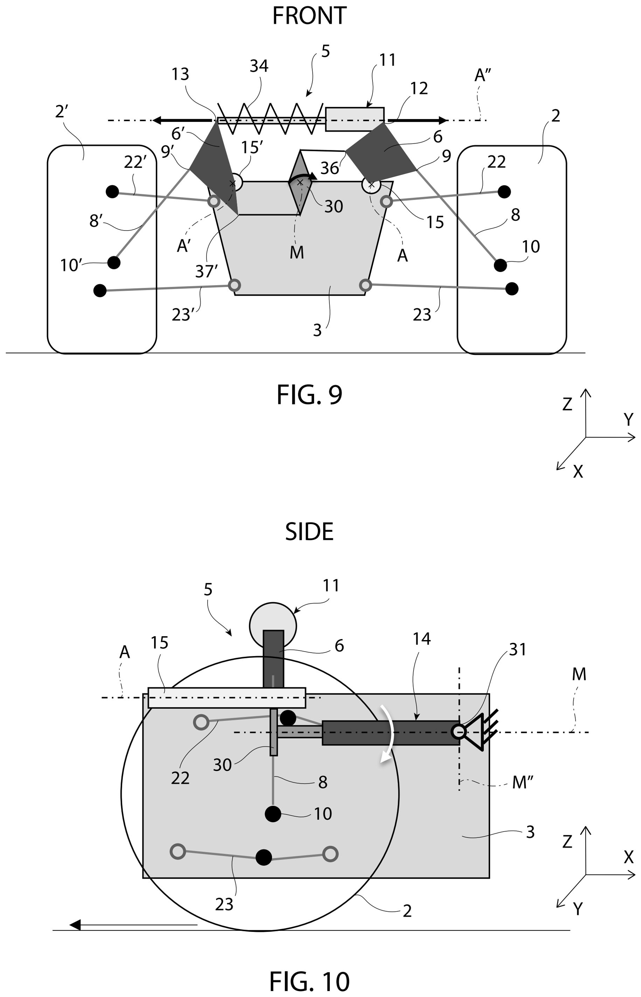

Figures 9 and 10 are a front view and a side view of a second embodiment of an active suspension according to the present invention under neutral conditions (electric suspension motors not active and with the vehicle not cornering and in the absence of vertical shaking) . As already mentioned, the differences from the previous figures are the bar geometry with different attachment points to the rocker arms, the different geometry of the rocker arms and the different coupling of the motor to the frame. Figures 9 and 10 show a bar 30' with a substantially vertical trend and two rockers arms 6, 6' defending each other. In fact, the transverse bar 30' is coupled to the rocker arms 6, 6' at attachment points 36', 37' at different elevations along the vertical direction parallel to the yaw axis Z. As visible, the attachment points 36', 37' are located along the vertical direction parallel to the yaw axis Z on opposite sides of the pivots 4, 4' while the centre of the bar 30' where the axis M passes is at approximately the same elevation as the pivots 4, 4'. In this example, the rotary electric motor 14 comprises an end 31 opposite the bar 30 constrained to the frame 3 in a rotatable manner around an axis M" parallel to the yaw axis Z.

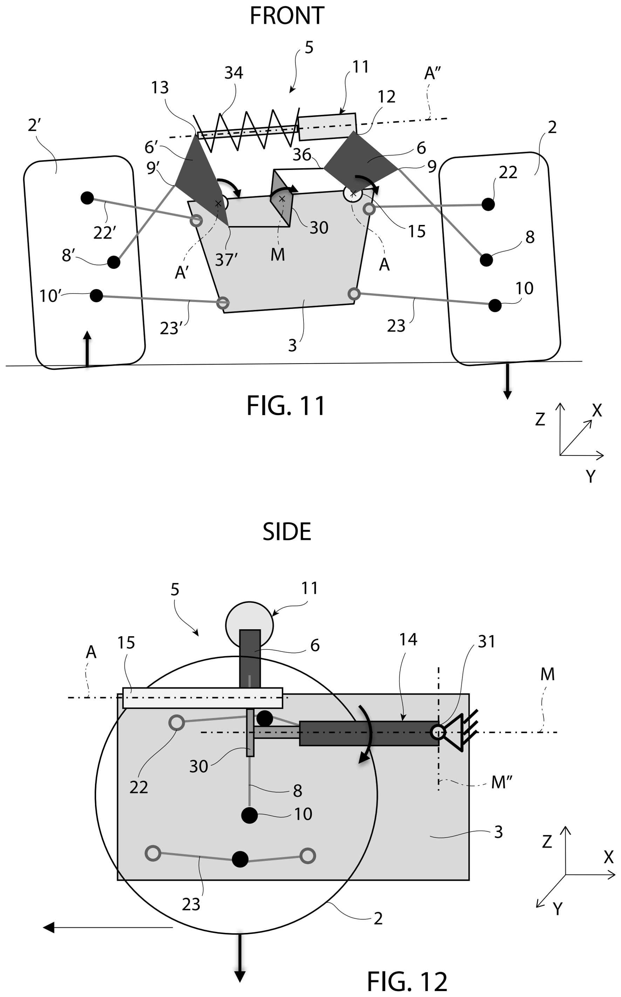

Figures 11 and 12 are a front view and a side view of the aforesaid second embodiment under cornering conditions (only rotary electric motor 14 active with the vehicle cornering in the absence of vertical shaking). It can be seen that the rotation of the bar 30' generates a concordant rotation of the rocker arms, which then, due to the effect of the arms 8, 8', act in an opposite way on the two wheels 2 2' to properly run the curved trajectory. In this condition the damper (with its motor) is not active.

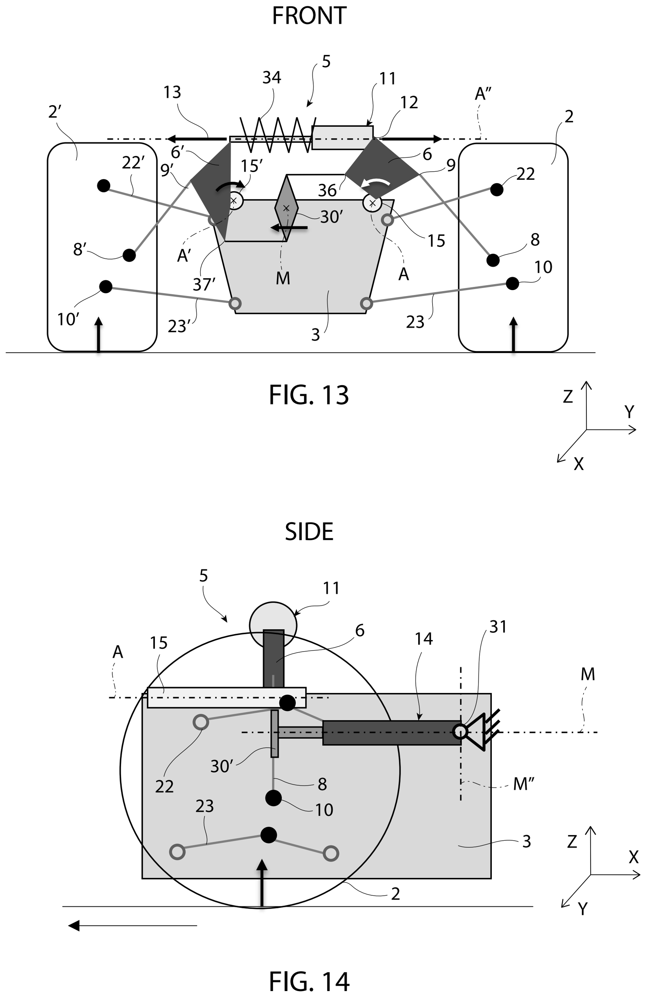

Figures 13 and 14 are a front view and a side view of the aforesaid second embodiment under vertical shaking conditions (electric rotary suspension motor not active, damper motor activated and with vehicle not cornering). It can be noted that the lifting of the wheels 2, 2' generates, thanks to the arms 8, 8', a discordant rotation of the rocker arms which actually push the bar 30' sideways. This movement is promoted by the fact that the opposite end 31 of the motor is coupled to the frame in a rotatable manner around the axis M" parallel to the yaw axis Z.

The shaking can then be managed by the active control on the damper 11 by driving its motor.

It was shown that the second embodiment, from the rest configuration of Figures 9 and 10, also allows the curve to be actively performed and the vertical shake to be absorbed.

It is finally clear that changes and variations can be made to the invention described and shown herein without departing from the protection scope of the present invention, as defined in the appended claims.

## Claims

1. Road vehicle (1) with a roll axis (X), a pitch axis (Y), and a yaw axis (Z); wherein the vehicle comprises a chassis (3), two front wheels (2, 2'), two rear wheels (32), an active front suspension assembly (5) acting simultaneously on the two front wheels (2, 2') and/or an active rear suspension assembly acting simultaneously on the two rear wheels (32); wherein the active front suspension assembly (5) and/or rear suspension assembly comprises:
- a first and second rocker arm (6, 6') coupled to the frame (3) from opposite sides along the pitch axis (Y) and pivoting around corresponding pivots (4, 4') with axes parallel to each other (A, A') in a plane orthogonal to the yaw axis (Z) and at the same elevation along the yaw axis (Z);
- a first and second suspension arm (8, 8') each having a first end (9, 9') coupled to the corresponding rocker arm (6, 6') on the wheel side (2, 2') and a second end (10, 10') coupled to the corresponding wheel (2, 2');
- a rod damper (11) of variable length along an axis (A") parallel to the pitch axis (Y) having a first end (12) coupled to one of the two rocker arms (6) and a second end (13) coupled to the other rocker arms (6');
- A cross bar (30) to bridge between the two rocker arms (6, 6');
- an electric motor (14), preferably rotary, acting directly on the bar (30) to control the rotation of the bar (30) around an axis (M) parallel to the axes (A, A') of the pivots (4, 4') and thus generate the corresponding rotation of the two rocker arms (6, 6').

2. Vehicle according to any of the preceding claims, wherein the rod damper (11) is an active device driven by an electric motor, controlled by a control unit; preferably a coil spring (34) is provided around the rod damper (11).

3. Vehicle according to any of the preceding claims, wherein for each rocker arm (6, 6') there is a torsion bar (15, 15') coaxial with the corresponding pivot (4, 4') along the axis (A, A') and acting directly on the corresponding rocker arm (6, 6') at its pivot (4, 4').

4. Vehicle according to any of the previous claims, wherein:
- the crossbar (30) is coupled to the rocker arms (6, 6') at attachment points (36, 37) at the same elevation along the vertical direction parallel to the yaw axis (Z).

5. Vehicle according to claim 4, wherein the attachment points (36, 37) are located along the vertical direction parallel to the yaw axis (Z) at a higher elevation than the pins (4, 4').

6. Vehicle according to claim 4 or 5, wherein the electric motor (14) comprises an end (31) opposite the bar (30) constrained to the frame (3) in a rotatable manner about an axis (M') parallel to the roll axis (Y).

7. Vehicle according to any of the previous claims 1 to 3, wherein:
- the crossbar (30') is coupled to rocker arms (6, 6') at attachment points (36', 37') at different elevations along the vertical direction parallel to the yaw axis (Z).

8. Vehicle according to claim 7, wherein the attachment points (36', 37') are located along the vertical direction parallel to the yaw axis (Z) from opposite sides to the pins (4, 4').

9. Vehicle according to claim 7 or 8, wherein the electric motor (14) comprises an end (31) opposite the bar (30) constrained to the frame (3) in a rotatable manner about an axis (M") parallel to the yaw axis (Z).
